## Europäisches Patentamt
## European Patent Office
## Office européen des brevets

(19)

(11) Veröffentlichungsnummer: **0 065 064**
**B1**

(12) **EUROPÄISCHE PATENTSCHRIFT**

(45) Veröffentlichungstag der Patentschrift:
26.11.86

(51) Int. Cl.⁴: **F 02 B 27/00**

(21) Anmeldenummer: **82100436.3**

(22) Anmeldetag: **22.01.82**

(54) Ansaugsystem mit Schwingrohren.

(30) Priorität: **14.05.81 DE 3119190**

(43) Veröffentlichungstag der Anmeldung:
**24.11.82 Patentblatt 82/47**

(45) Bekanntmachung des Hinweises auf die Patenterteilung:
**26.11.86 Patentblatt 86/48**

(84) Benannte Vertragsstaaten:
**AT DE FR GB IT**

(56) Entgegenhaltungen:
**AT-B-253 305**
**DE-A-2 306 131**
**DE-A-2 403 090**
**DE-A-2 702 160**
**GB-A-849 337**
**US-A-2 837 074**

(73) Patentinhaber: **Klöckner- Humboldt- Deutz Aktiengesellschaft, Deutz- Mülheimer- Strasse 111 Postfach 80 05 09, D-5000 Köln 80 (DE)**

(72) Erfinder: **Bauer, Lothar, Am Hirschsprung 2, D-5000 Köln 91 (DE)**
Erfinder: **Schleiermacher, Herbert, Am Hülderberg 13, D-5040 Brühl (DE)**

## Beschreibung

Die Erfindung bezieht sich auf ein Ansaugsystem für eine mehrzylindrische Brennkraftmaschine, insbesondere für eine Einspritz-Brennkraftmaschine, mit Ansaugschwingrohren, die einerseits mit Zylinderköpfen der Brennkraftmaschine und andererseits über jeweils ein Endstück mit einem gemeinsamen Ansauggehäuse verbunden sind, wobei die Ansaugschwingrohre in mehr als eine Ebene gekrümmt sind.

Ein gattungsgemäßes Ansaugsystem ist aus der AT-B-253 305 bekannt. Einer mehrzylindrigen Brennkraftmaschine wird über eine parallel zu der Kurbelwelle angeordnete Ansaugleitung die Verbrennungsluft zugeführt. Von dieser parallelen Ansaugleitung zweigen schraubenförmig um die Ansaugleitung gewundene Zuführungskanäle zu den einzelnen Zylinderköpfen ab. Das Ansaugsystem ist derart ausgelegt, daß die Länge der Zuführungskanäle einen Resonanzeffekt in der zugeführten Verbrennungsluft erzeugt, wodurch eine besonders günstige Füllung der Zylinder erreicht wird. Solche Ansaugsysteme sind unter dem Stichwort Resonanzaufladung bekannt. Es hat sich jedoch gezeigt, daß das aus der AT-B bekannte Ansaugsystem beim Anbau an die Brennkraftmaschine einen erheblichen Platzbedarf beansprucht. Die schraubenförmig um das Ansaugrohr gewickelten Zuführungskanäle erhöhen den gesamten Durchmesser und sorgen dafür, daß das gesamte Ansaugsystem mit einem erheblichen Abstand von der Brennkraftmaschine angeordnet werden muß. Zudem handelt es sich hier um ein sehr verwickelt aufgebautes Teil, wodurch die Herstellung, beispielsweise durch ein Spritzgußverfahren, erheblich erschwert und verteuert wird.

Es ist ferner aus der DE-A 25 25 769 ein Ansaugsystem zur Resonanzaufladung bekannt, bei dem die Schwingrohranlage separat an der Stirnseite der Brennkraftmaschine angeordnet ist. Die Ansaugschwingrohre sind hier im wesentlichen als einzelne Rohre ausgebildet, die um jeweils eine optimale Rohrlänge zu erreichen, stirnseitig an der Brennkraftmaschine fortgesetzt sind. Der Bauaufwand eines solchen Ansaugsystems wird durch die einzelne Ausführung der Ansaugschwingrohre beträchtlich erhöht und zudem beansprucht das Gesamtsystem bestehend aus Brennkraftmaschine und Ansaugschwingrohren einen erheblichen Bauaufwand.

Zwar ist aus der DE-A-24 03 090 ein Ansauggehäuse für eine Brennkraftmaschine bekannt, bei dem die Ansaugrohre in einem gemeinsamen Ansauggehäuse trichterförmig enden, aber die Ansaugrohre sind maximal in nur einer Ebene gekrümmt und zudem als völlig von dem Ansauggehäuse getrennte Kanäle ausgebildet. Soll ein für die Resonanzaufladung genau festgelegte Ansaugrohrlänge erreicht werden, so wird ein derartiges Ansaugsystem ensprechend groß und sperrig. Auch ist keinesfalls mehr eine einfache und konstengünstige Fertigung möglich.

Nur durch die Ausführung der Ansaugschwingrohre als Teilbereiche des Ansauggehäuses und die Krümmung in mehreren Ebenen ist es möglich, alle Ansaugschwingrohre raumsparend und trotz einer für die Resonanzaufladung notwendigen erheblichen Länge in nur einem Ansauggehäuse unterzubringen, und damit die erfindungsgemäßen Vorteile zu erzielen.

Der Erfindung liegt die Aufgabe zugrunde, ein nach dem Resonanzaufladeprinzip arbeitendes Ansaugsystem für eine Brennkraftmaschine zu schaffen, das in raumsparender Weise an der Brennkraftmaschine angeordnet ist.

Diese Aufgabe wird durch ein Ansaugsystem mit den Merkmalen des Anspruchs 1 gelöst.

Die Ansaugschwingrohre sind zur Einhaltung der optimalen Längen in mehreren Ebenen gekrümmt und derart angeordnet, daß sie dicht am Zylinderkopf anliegen und mit ihren Ansaugtrichtern in einem gemeinsamen Ansauggehäuse enden. Dadurch kann die Forderung für einen Aufladeeffekt durch Resonanzschwingungen erfüllt werden. Zur Vereinfachung des Aufbaus des gesamten Ansaugsystems sind die Ansaugschwingrohre zumindest in Teilbereichen aus zwei Schalenhälften aufgebaut, wobei die eine Schalenhälfte Bestandteil der zylinderkopfseitigen Wand des Ansauggehäuses ist und die andere Schalenhälfte aufgesetzt und mittels Schraubund/oder Schnappverbindung mit der ersten verbunden ist. Da die Trennflächen der Schalenhälften in Strömungsrichtung liegen, ist sicher gewährleistet, daß die Strömung im Ansaugschwingrohr nicht behindert wird. Durch diesen Aufbau des Ansaugsystems kann Material und damit Gewicht eingespart werden, zudem werden die Herstellungskosten günstig beeinflußt, da nur wenige verschiedene Teile hergestellt werden müssen, die nach dem Baukastenprinzip zusammengesetzt werden.

In einer Ausgestaltung der Erfindung ist es vorgesehen, daß die Ansaugschwingrohre sich in dem Ansauggehäuse miteinander kreuzen. An den Kreuzungsstellen der Ansaugschwingrohre sind die benachbarten Schalenhälften der sich kreuzenden Ansaugschwingrohre zu einem Bauteil zusammengefaßt. Auch durch dieses Merkmal wird Material und somit Gewicht eingespart.

In einer Fortbildung der Erfindung sind die Ansaugschwingrohre im Inneren des Ansauggehäuses über die Länge in Abschnitte einzelner Teilrohre aufgeteilt. Wenn zwei Abschnitte eines Ansaugschwingrohres als Teilrohre aneinanderstoßen, entstehen an den Übergangsstellen quer zur Strömung im Ansaugschwingrohr verlaufende Stoßstellen. Diese Stoßstellen der Ansaugschwingrohre sind so ausgebildet, daß die Rohrinnenkontur des vorherigen Teilrohres jeweils kleiner ist als die des nachfolgenden, so daß die Strömung in den Ansaugschwingrohren nicht behindert wird.

In einer weiteren Ausgestaltung der Erfindung sind die parallel zur Strömungsrichtung verlaufenden Trennflächen der Schalenhälften der Ansaugschwingrohre durch angespritzte Dichtlippen und/oder Falze abgedichtet. Diese Art der Abdichtung ist konstruktiv einfach und montagefreundlich. Im allgemeinen müssen die Trennflächen und die quer zur Strömungsrichtung verlaufenden Stoßstellen nicht 100 %ig dicht sein, da sie innerhalb des Ansauggehäuses liegen.

In Weiterbildung der Erfindung ist das Ansauggehäuse insgesamt zur Einsparung von Kosten und Gewicht aus Aluminiumguß oder Kunstostoffspritzguß hergestellt. Zur weiteren Gewichtsreduzierung kann auch eine Ausbildung des Ansauggehäuses aus verstärktem Kunststoff, z. B. glasfaserverstärktem Polyamid, vorgesehen sein.

Zweckmäßig wird zum Schutz vor Überhitzung der Kunststoffteile ein Wärmestrahlungsschirm vorgesehen, der die am Zylinderkopf und Kurbelgehäuse abgestrahlte Wärme vom Ansaugsystem fernhält.

In weiterer Ausgestaltung der Erfindung ist zwischen Kunststoff-Ansauggehäuse und Zylinderkopf eine Aluminiumanschraubleiste angeordnet, die mit dem Ansauggehäuse mittig über eine Schraube mit Zentrierhülse und seitlich über elastische Gelenkbefestigung verbunden ist. Die unterschiedlichen Wärmedehnungen von Aluminiumleiste und Kunststoffgehäuse werden von den Kunststoffgelenken aufgenommen. Ein zwischen Aluminiumleiste und Kunststoffgehäuse vorgesehener Spalt verhindert einen zu großen Wärmefluß von der Aluminiumleiste in das Kunststoffgehäuse und sorgt dafür, daß die unterschiedliche Wärmedehnung klein bleibt.

In Weiterbildung der Erfindung ist die dem Zylinderkopf abgewandte Seite des Ansauggehäuses derart ausgebildet, daß ein Luftfilterelement unmittelbar anbringbar ist, d. h. ohne weitere Befestigung an anderen Motorteilen und ohne Zwischenschaltung einer Schlauchverbindung. In dem Ausführungsbeispiel besteht die dem Zylinderkopf abgewandte Seite des Ansauggehäuses nur aus einem offenen Rahmen, der zur Aufnahme eines Plattenluftfilters geeignet ist.

Ein weiterer Vorteil des erfindungsgemäßen Ansaugsystems liegt darin, daß durch die zweckmäßige räumliche Krümmung der Schwingrohre für eine Brennkraftmaschine mit Direkteinspritzung der erforderliche Drall der Frischladung im Brennraum unterstützt wird.

Weitere Merkmale der Erfindung ergeben sich aus der Beschreibung, in der in der Zeichnung dargestellte Ausführungsbeispiele der Erfindung näher erläutert sind. Es zeigt:

Fig. 1 eine perspektivische Ansicht eines erfindungsgemäßen Ansaugsystems,

Fig. 2 einen Querschnitt durch ein erfindungsgemäßes Ansaugsystem mit einer Anschraubleiste,

Fig. 3 einen Querschnitt durch ein Ansaugsystem ohne Anschraubleiste,

Fig. 4 einen Querschnitt durch ein Ansaugsystem ohne Anschraubleiste mit einem aufgesetzten, einstückigem Teilrohr.

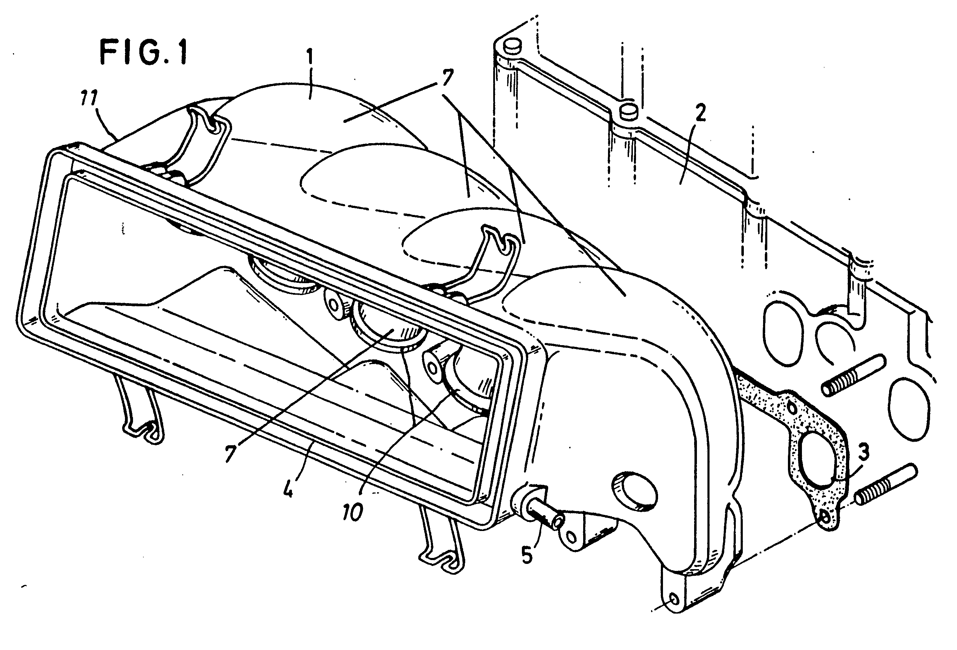

In Fig. 1 ist ein erfinderungsgmäßes Ansaugsystem mit einem Ansauggehäuse 1 gezeigt, welches über eine wärmedämmende Dichtung 3 an einem Zylinderkopf 2 einer Brennkraftmaschine angeschraubt ist. Die wärmedämmende Dichtung 3 dient als Zwischenlage und soll gegebenenfalls die Wärmeleitung vom Zylinderkopf 2 auf das Ansauggehäuse 1 verringern. In dem Ansauggehäuse 1 sind Ansaugschwingrohre 7 angeordnet, die in Teilbereichen auf ihrer axialen Länge als Bestandteil der Wandung 11 des Ansauggehäuses 1 ausgebildet sind. An den offenen Enden der Ansaugschwingrohre 7 sind diese innerhalb des Ansauggehäuse 1 mit Ansaugtrichtern 10 versehen. Das offene Ende des Ansauggehäuses 1 ist als Rahmen 4 ausgebildet, so daß ein Luftfilterelement, beispielsweise ein Plattenluftfilter, direkt von dem Ansauggehäuse 1 aufgenommen werden kann. Ferner ist ein Anschluß 5 für eine Kurbelgehäuseentlüftungsleitung vorgesehen.

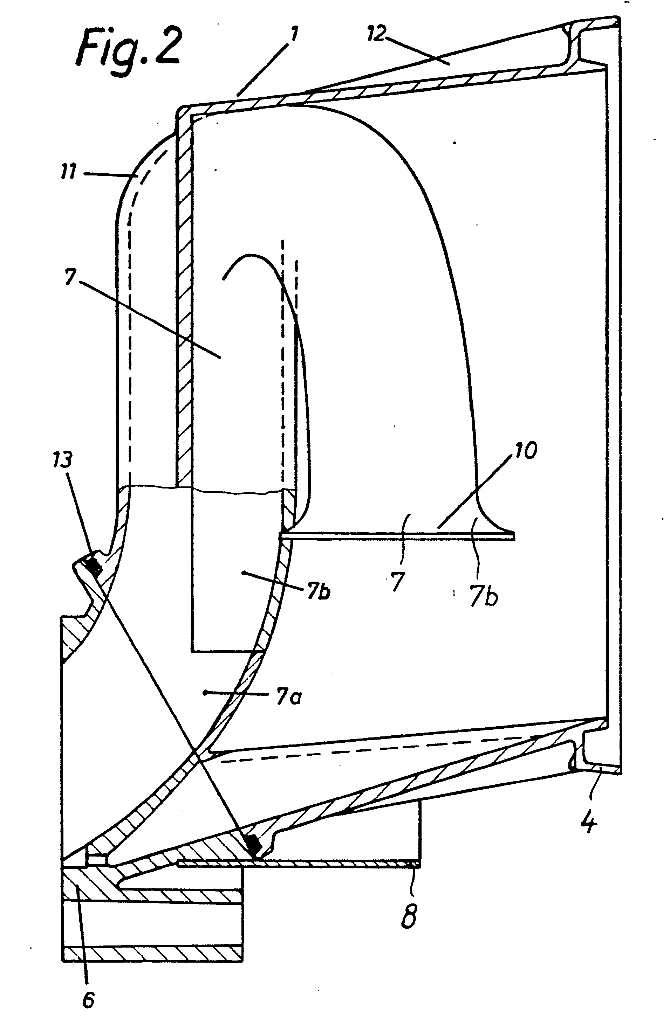

In Fig. 2 ist ein Ansauggehäuse 1 mit einer Aluminiumanschraubleiste 6 dargestellt. Das Ansauggehäuse 1 besteht aus Kunststoff, weshalb ein Wärmestrahlungsschirm 8 vorgesehen ist, der das Ansauggehäuse 1 vor schädlicher Wärmeeinwirkung seitens der Brennkraftmaschine schützt. Das Ansauggehäuse 1 ist über einen abgedichteten Anschluß 13 an der Aluminiumanschraubleiste 6 befestigt. Das Ansaugschwingrohr 7 verläuft von der Aluminiumanschraubleiste 6 in das Ansauggehäuse 1, an dessen Wandung 11 entlang bis in einem Ansaugtrichter 10, der zum Inneren des Ansauggehäuses 1 offen ist. Das Ansaugschwingrohr 7 ist in zwei Schalenhälften 7a, 7b geteilt, wobei die Schalenhälfte 7a Teil der Wandung 11 des Ansauggehäuses 1 ist. Die Schalenhälfte 7b ist auf die Schalenhälfte 7a aufgesetzt und geht rohrförmig in den Ansaugtrichter 10 über. Die obere Schalenhälfte 7b ist dabei zusätzlich sowohl in Richtung des Rahmens 4 als auch aus der Bildebene heraus gekrümmt. An den seitlichen Wänden des Ansauggehäuses 1 sind Rippen 12 angeordnet. Die Hohlräume zwischen den Rippen können mit Schalldämmstoff gefüllt sein. Das Ansauggehäuse kann auch in Sandwich-Bauweise ausgeführt sein, wobei zwischen der äußeren und inneren Schale Schalldämmstoffe vorgesehen sind. Gegebenenfalls sind dann die äußere und innere Schale mit Stegen verbunden. Das gesamte Ansauggehäuse 1 kann somit in einfacher Weise durch Gießen oder Spritzgießen hergestellt werden, wobei nach dessen Fertigung die getrennt hergestellten Schalenhälften 7b durch einfaches Aufsetzen die fertigen Ansaugschwingrohr 7 bilden.

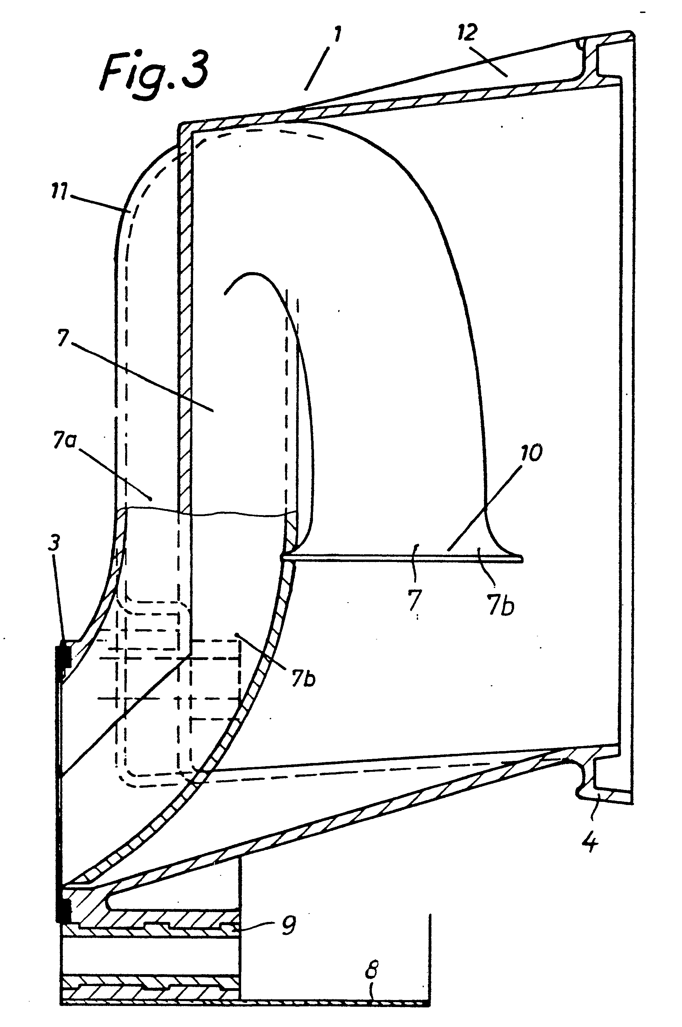

In Fig. 3 ist eine Ausbildung des Ansauggehäuses 1 ohne Aluminiumanschraubleiste 6 gezeigt. Das Ansauggehäuse 1 ist direkt über die Dichtung 3 an den nicht gezeigten Zylinderkopf 2 der Brennkraftmaschine angeschraubt. Zur Befesteigung dient eine Hülse 9 als Zwischenlage für die Schrauben. Das gesamte Ansauggehäuse 1 ist wiederum aus Kunststoff hergestellt und weist einen Wärmestrahlungsschirm 8 auf. Die Schalenhälfte 7a ist als Teil der Wandung 11 ausgeführt und das komplette Ansaugschwingrohr 7 wird durch Aufsetzen der oberen Schalenhälfte 7b mit dem Ansaugtrichter 10 gebildet. Das Ansaugschwingrohr 7 ist sowohl in dem Wandbereich des Ansauggehäuses 1 als auch im Teilbereich der oberen Schalenhälfte 7b in mehr als einer Ebene gekrümmt ausgebildet.

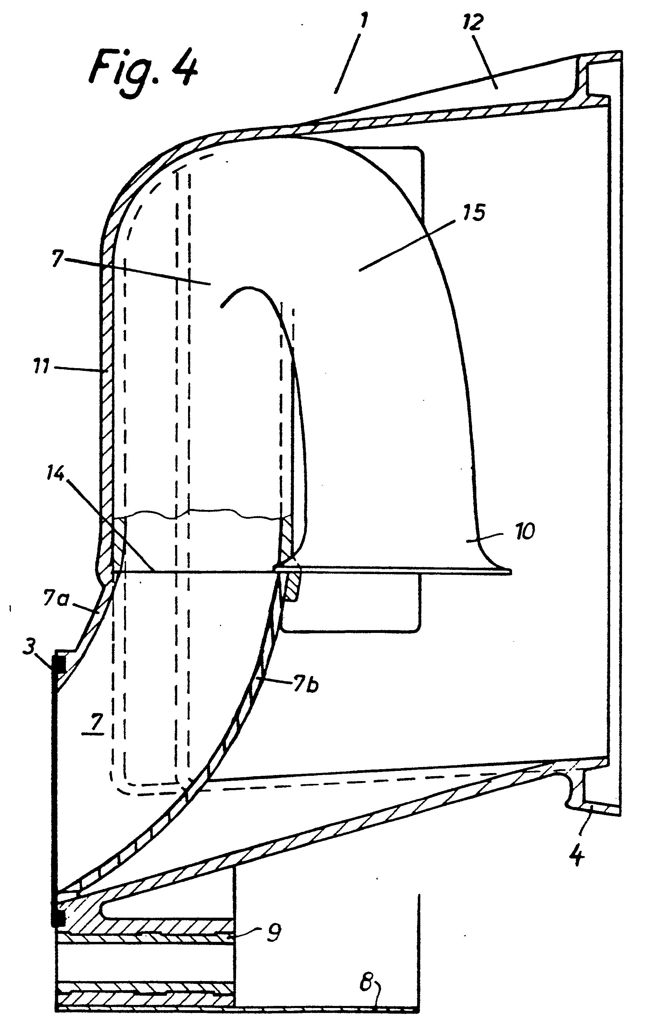

Das in Fig. 4 gezeigte Ansauggehäuse 1 ist in der Befestigung mit dem in Fig. 3 gezeigten identisch. Die Schalenhälfte 7a ist als Teil der Wandung 11 des Ansauggehäuses 1 ausgebildet und die Schalenhälfte 7b ist auf diese aufgesetzt. Beide Schalenhälften 7a und 7b enden in einer quer zur Strömungsrichtung verlaufenden Stoßstelle 14 des Ansaugschwingrohres 7. An dieser Stoßstelle 14 schließt ein einstückiges Teilrohr 15 an, das das Ansaugschwingrohr 7 bis zum Ansaugtrichter 10 fortsetzt. Auch das Teilrohr 15 ist in mehr als einer Ebene krümmt.

## Patentansprüche

1. Ansaugsystem für eine mehrzylindrige Brennkraftmaschine, insbesondere für eine Einspritzbrennkraftmaschine, mit Ansaugschwingrohren (7), die einerseits mit Zylinderköpfen (2) der Brennkraftmaschine und andererseits über jeweils ein Endstück mit einem gemeinsamen Ansauggehäuse (1) verbunden sind, wobei die Ansaugschwingrohre (7) in mehr als einer Ebene gekrümmt sind, dadurch gekennzeichnet, daß die im Inneren des Ansauggehäuses (1) angeordneten Endstücke als Ansaugtrichter (10) ausgebildet sind, daß die Ansaugschwingrohre (7) zumindest über einen Teilbereich im Inneren des Ansauggehäuses (1) an der den Zylinderköpfen (2) zugewandten Wandung (11) des Ansauggehäuses (1) verlaufen und daß die Ansaugschwingrohre (7) zumindest in diesen Teilbereichen in mehr als einer Ebene gekrümmt sind und mindestens in Teilbereichen aus Schalenhälften (7a, 7b) bestehen, wobei die Wandung (11) des Ansauggehäuses (1) als eine Schalenhälfte (7a) ausgebildet ist und jeweils die eine Schalenhälfte (7a) eines Ansaugschwingrohres (7) in die Wandung (11) des Ansauggehäuses (1) eingeformt ist und auf der entlang der parallel zur Strömungsrichtung verlaufenden Trennfläche die zweite Schalenhälfte (7b) befestigt ist.

2. Ansaugsystem nach Anspruch 1, dadurch gekennzeichnet, daß das Ansauggehäuse (1) direkt an den Zylinderköpfen (2) der Brennkraftmaschine befestigt ist.

3. Ansaugsystem nach Anspruch 1 oder 2, dadurch gekennzeichnet, daß die Ansaugschwingrohre (7) derart im Inneren des Ansauggehäuses (1) angeordnet sind, daß sich jeweils·zwei Ansaugschwingrohre (7) kreuzen und daß an den Kreuzungsstellen die sich kreuzenden Schalenhälften (7a, 7b) der beiden Ansaugschwingrohre (7) zu einem Bauteil vereinigt sind.

4. Ansaugsystem nach einem Ansprüche 1 bis 3, dadurch gekennzeichnet, daß die Ansaugschwingrohre (7) im Inneren des Ansauggehäuses (1) über die Länge in Abschnitte einzelner Teilrohre (15) aufgeteilt sind, wobei an der Stoßstelle (14), an der jeweils zwei Abschnitte eines Ansaugschwingrohres (7) bzw. zwei Teilrohre (15) miteinander verbunden sind, die Rohrinnenkontur des in Stromungsrichtung betrachteten vorherigen Abschnitts kleiner als die des nachfolgenden Abschnittes ausgebildet ist.

5. Ansaugsystem nach einem der Ansprüche 1 bis 3, dadurch gekennzeichnet, daß die Schalenhälften (7a, 7b) der Ansaugschwingrohre (7) in ihren Trennflächen durch angespritzte Dichtlippen abgedichtet sind.

6. Ansaugsystem nach einem der Ansprüche 1 bis 5, dadurch gekennzeichnet, daß das Ansaugsystem aus Aluminiumguß hergestellt ist.

7. Ansaugsystem nach einem der Ansprüche 1 bis 5, dadurch gekennzeichnet, daß das Ansaugsystem aus Kunststoffspritzguß hergestellt ist.

8. Ansaugsystem nach einem der Ansprüche 1 bis 5, dadurch gekennzeichnet, daß das Ansauggehäuse aus verstärktem Kunststoff, z. B. glasfaserverstärktem Polyamid, hergestellt ist.

9. Ansaugsystem nach Anspruch 7 oder 8, dadurch gekennzeichnet, daß zum Schutz vor Überhitzung des Kunststoffs ein Wärmestrahlungsschirm (8) am Ansaugsystem vorgesehen ist.

10. Ansaugsystem nach einem der Ansprüche 7 bis 9, dadurch gekennzeichnet, daß an dem Ansauggehäuse (1) eine Aluminiumanschraubleiste (6) vorgesehen ist, die zwischen dem Ansauggehäuse (1) und den Zylinderköpfen (2) angeordnet mit den Zylinderköpfen (2) verbunden ist und mit dem Ansauggehäuse (1) mittig über eine Schraube sowie seitlich über eine elastische Gelenkverbindung verbunden ist.

11. Ansaugsystem nach einem der Ansprüche 1 bis 10, dadurch gekennzeichnet, daß die den Zylinderköpfen (2) abgewandte Seite des Ansauggehäuses (1) im wesentlichen aus einem offenen Rahmen (4) besteht, der zur Aufnahme eines Plattenluftfilters geeignet ist.

12. Ansaugsystem nach einem der Ansprüche 1 bis 11, dadurch gekennzeichnet, daß das Ansauggehäuse (1) außen und innen mit Rippen versehen ist, die senkrecht oder geneigt auf der Oberfläche des Ansauggehäuses (1) angeordnet sind.

13. Ansaugsystem nach Anspruch 12, dadurch gekennzeichnet, daß die zwischen den Rippen entstandenen Hohlräume mit Schalldämmstoff gefüllt sind.

**Claims**

An induction manifold for a multi-cylinder internal combustion engine, particularly a fuel-injection engine, the manifold including resonant induction pipes (7) each being secured at its one end to a respective one of the engine's cylinder heads (2) and with its end portion terminating at its opposite end to the common induction housing (1), the resonant induction pipes (7) being curved in more than one plane, characterized in that the end portions disposed within the induction housing (1) are formed as induction funnels (10), that each of the resonant induction pipes (7) extends for at least a part of its length disposed within the induction housing (1) along the housing's (1) wall (11) facing the cylinder heads (2), that at least these part lengths of the resonant induction pipes (7) are curved in more than one plane, that at least a part length of each induction pipe is made of half-shells (7a, 7b), that the induction housing's (1) wall (11) constitutes one half-shell (7a), that the one half-shell (7a) of each induction pipe (7) is formed integrally with the wall (11) of the housing (1), and in that the other half-shell (7b) is secured to the one half-shell at the joint face extending parallel with the direction of flow.

2. An induction manifold according to claim 1, characterized in that the induction housing (1) is directly secured to the engine's cylinder heads (2),

3. An induction manifold according to claim 1 or claim 2, characterized in that the resonant induction pipes (7) are arranged within the induction housing (1) in such a way that any two induction pipes (7) intersect, and in that at the intersection the intersecting half-shells (7a, 7b) of the respective two induction pipes (7) are combined into a single component.

4. An induction manifold according to any of the claims 1 to 3, characterized in that the length of each resonant induction pipe (7) disposed within the induction housing (1) is divided into sections of individual pipe portions (15), that two consecutive sections, ot two pipe portions (15), of each induction pipe are joined at a junction (14), and in that at the respective junction the internal pipe contour of the section upstream thereof is smaller than that of the section downstream thereof.

5. An induction manifold according to any of the claims 1 to 3, characterized in that the half-shells (7a, 7b) of the resonant induction pipes (7) are sealed at their joint faces by gaskets extruded thereon.

6. An induction manifold according to any of the claims 1 to 5, characterized in that the manifold is made of cast aluminium.

7. An induction manifold according to any of the claims 1 to 5, characterized in that the manifold is made of an injection moulded plastics material.

8. An induction manifold according to any of the claims 1 to 5, characterized in that the induction housing is made of a reinforced plastics material, for example a polyamide reinforced by glass fibres.

9. An induction manifold according to claim 7 or claim 8, characterized in that the manifold is provided, for the purpose of protecting the plastics material against overheating, with a heat shield (8).

10. An induction manifold according to any of the claims 7 to 9, characterized in that the induction housing (1) is provided with a screw-fastenable batten (6) arranged between the housing (1) and the cylinder heads (2), and in that the batten is secured, at its mid-length, to the induction housing (1) by a screw and, laterally, by a hinge joint.

11. An induction manifold according to any of the claims 1 to 10, characterized in that the induction housing's (1) side remote from the cylinder heads (2) is substantially an open frame suited to accommodate a plate air filter.

12. An induction manifold according to any of the claims 1 to 11, characterized in that the induction housing (1) is provided on its external and internal surfaces with fins perpendicularly or slantingly arranged on the respective surface of the induction housing (1).

13. An induction manifold according to claim 12, characterized in that the interstices between the fins are filled with a sound-absorbing substance.

**Revendications**

1.- Système d'admission pour un moteur à combustion interne multicylindres, notamment pour un moteur à combustion interne à injection, avec des tubes d'admission résonnants (7), qui sont reliés, d'une part, aux têtes de cylindres (2) du moteur à combustion interne et, d'autre part, par l'intermédiaire respectivement d'une pièce terminale, à un carter d'admission commun (1), les tubes d'admission résonnants (7) étant courbés dans plus qu'un plan, système caractérisé en ce que les pièces terminsles disposées à l'intérieur du carter d'admission (1) revêtent la forme d'entonnoirs d'admission (10), les tubes d'admission résonnants (7) s'étendant au moins sur une zone partielle à l'intérieur du carter d'admission (1) sur la paroi (11), tournée vers les têtes de cylindres (2), du carter d'admission (1) et ces tubes d'admission résonnants (7) étant courbés dans plus d'un plan au moins dans ces zones partielles, et étant constitués au moins dans ces zones partielles de moitiés de coquilles (7a, 7b), la paroi (11) du carter d'admission (1) constituant une moitié de coquille (7a), l'une (7a) des moitiés de coquilles d'un tube d'admission résonnant (7) étant respectivement mise en forme dans la paroi (11) du carter d'admission (1), et sur cette moitié de coquille, est fixée, le long de la surface de cette séparation s'étendant parallèlement à la direction de l'écoulement, la deuxième moitié de coquille (7b).

2.- Système d'admission selon la revendication 1, caractérisé en ce que le carter d'admission (1) est directement fixé sur les têtes de cylindres (2) du moteur à combustion interne.

3.- Système d'admission selon la revendication 1 ou 2, caractérisé en ce que les tubes d'admission résonnants (7) sont disposés à l'intérieur du carter d'admission (1) de façon que deux tubes d'admission résonnants (7) se croisent respectivement et qu'en leurs points de croisement, les moitiés de coquilles (7a, 7b) des deux tubes d'admission résonnants (7) soient réunies en une seule pièce constitutive.

4.- Système d'admission selon une des revendications 1 à 3, caractérisé en ce que les tubes d'admission résonnants (7) à l'intérieur du carter d'admission (1) sont subdivisés sur leur longueur en tronçons de tubes partiels individuels (15), tandis qu'aux points d'aboutement (14) où les deux tronçons respectifs d'un tube d'admission résonnant (7) ou bien deux tubes partiels (15) sont reliés ensemble, le contour interne du tube du tronçon antérieur, vu dans le sens de l'écoulement, est inférieur à celui du tronçon suivant.

5.- Système d'admission selon une des revendications 1 à 3, caractérisé en ce que les moitiés de coquilles (7a, 7b) des tubes d'admission résonnants (7) sont étanchées sur leurs surfaces de séparation par des lèvres d'étanchement moulées par injection.

6.- Système d'admission selon une des revendications 1 à 5, caractérisé en ce que le système d'admission est réalisé en fonderie d'aluminium.

7.- Système d'admission selon une des revendications 1 à 5, caractérisé en ce que le système d'admission est réalisé en matière plastique moulée par injection.

8.- Système d'admission selon une des revendications 1 à 5, caractérisé en ce que le carter d'admission est réalisé en matière plastique renforcée, par exemple une polyamide renforcée par des fibres de verre.

9.- Système d'admission selon la revendication 7 ou 8, caractérisé en ce que pour protéger la matière plastique de la surchauffe, il est prévu sur le système d'admission, une protection (8) contre le rayonnement thermique.

10.- Système d'admission selon une des revendications 7 à 9, caractérisé en ce qu'il est prévu sur le carter d'admission (1), une barrette de vissage en aluminium (6) qui, disposée entre le carter d'admission (1) et les têtes de cylindres (2), est reliée aux têtes de cylindres (2) et est reliée au carter d'admission (1) dans son milieu par l'intermédiaire d'une vis, ainsi que latéralement par l'intermédiaire d'une liaison élastique par articulation.

11.- Système d'admission selon une des revendications 1 à 10, caractérisé en ce que le côté opposé aux têtes de cylindres (2) du carter d'admission (1) est essentiellement constitué d'un cadre ouvert (4), qui est prévu pour recevoir un filtre d'air en plaques.

12.- Système d'admission selon une des revendications 1 à 11, caractérisé en ce que le carter d'admission (1) est muni à l'extérieur et à l'intérieur de nervures qui sont disposées perpendiculairement ou bien obliquement sur la surface du carter d'admission (1).

13.- Système d'admission selon la revendication 12, caractérisé en ce que les espaces creux existants entre les nervures sont remplis d'un matériau insonorisant.

FIG.1

# Fig.2

Fig.3

Fig. 4